# EUROPÄISCHE PATENTANMELDUNG

(11) **EP 0 582 845 A1**
(43) Veröffentlichungstag der Anmeldung: **16.02.1994**
(21) Anmeldenummer: 93111157.9
(22) Anmeldetag: 13.07.1993
(51) Int. Cl.: C03B 1/00, C03B 5/237, C03B 3/02

(54) **Regenerativer Glasschmelzofen**

(30) Priorität: 12.08.1992 DE 4226642
(71) Anmelder: Beteiligungen Sorg GmbH & Co. KG, D-97816 Lohr (DE)
(72) Erfinder: Pieper, Helmut, Dipl.-Ing., D-97816 Lohr/Main (DE)
(74) Vertreter: Schulze Horn, Stefan, Dipl.-Ing. M.Sc.

(57) **Zusammenfassung**

Die Erfindung betrifft einen regenerativen Glasschmelzofen, mit einer Glasschmelzwanne, wechselweise zuschaltbaren Regeneratoren mit einer Regenerativpackung aus Feuerfest-Material und Brennern.

Der neue Glasschmelzofen ist dadurch gekennzeichnet, daß die Regeneratoren (1) rund sind und einen Stahlmantel (5) aufweisen, der innen mit einer Auskleidung (6) aus Feuerfest-Material ausgestattet ist.

Weiter betrifft die Erfindung ein Verfahren zum Betreiben des Glasschmelzofens, welches dadurch gekennzeichnet ist, daß die Zeit für den Wechsel zwischen den Regeneratoren geringer als 10 Minuten ist.

## Beschreibung

Die Erfindung betrifft einen regenerativen Glasschmelzofen, mit einer Glasschmelzwanne, wechselweise zuschaltbaren Regeneratoren und Brennern.

Die seit langem bekannten und bewährten Regenerativwannen beziehen ihre hohe Wirtschaftlichkeit aus der Tatsache, daß die Verbrennungsluft auf sehr hohe Temperaturen vorgeheizt wird. Dadurch werden hohe Herdraumtemperaturen und gute Wärmeübergänge in dem Ofenraum sowie ein hoher Wirkungsgrad des Ofens erreicht.

Der Nachteil der bestehenden Regenerativwannen ist, daß bei den hohen Temperaturen zwangsläufig hohe Stickoxidgehalte des Abgases entstehen und daß zur Erreichung der hohen Luftvorwärmtemperaturen sehr große Kammern der Regeneratoren eingebaut werden müssen.

Die hohen Abgastemperaturen verlangen dabei sehr hochwertiges und aufwendiges Feuerfest-Material für die Kammergitterung, so daß ein Großteil der Kosten für eine Regenerativwanne durch den Bau der Kammern entsteht. Die großen Kammern haben zwangsläufig auch sehr große Flächen sowohl zwischen den Kammern als auch nach außen, so daß sie sehr schwer dicht zu halten sind und aufgrund der Tatsache, daß auf der Luftseite ein Überdruck und auf der Abgasseite ein Unterdruck besteht, erhebliche Falschluftmengen in die Abgaskammern gelangen und so zur Verminderung des Wirkungsgrades dieser Kammern führen.

Von der Anmelderin wurde bereits vorgeschlagen, den NOₓ-Anteil im Abgas auch bei relativ hohen Luftvorwärmtemperaturen dadurch erheblich zu verringern, daß die Durchmischung zwischen Brennstoff und Luft verzögert wird, so daß der Flammenkern relativ niedrige Temperaturen erreicht.

Gemäß einem weiteren Vorschlag der Anmelderin kann eine weitere NOₓ-Minderung dadurch erzielt werden, daß die Hauptflamme sehr stark unterstöchiometrisch gefahren wird und eine Nachverbrennung mit niedrigeren Lufttemperaturen im weiteren Verlauf der Feuerung erfolgt.

Nach dem Stand der Technik ist es bereits bekannt, zur Luftstufung Luft aus der Hauptkammer abzusaugen und im vorderen Teil der Wanne einzublasen. Das führt nachteilig aber zu einer Unterschichtung der kälteren Luft, so daß auf der Oberfläche eine stark oxidierenden Atmosphäre erzeugt wird, die zur Schaumbildung auf der Schmelze beiträgt und so den Wärmeübergang stark reduziert.

Es ist Aufgabe der Erfindung, einen regenerativen Glasschmelzofen derart auszubilden, daß die NOₓ-Emmission stark vermindert wird, d. h., daß der NOₓ-Anteil des Abgases stark herabgesetzt wird. Der Ofen soll weiterhin eine hohe spezifische Leistung haben, einfach aufgebaut und leicht zu regeln sein und gegenüber einem herkömmlichen Regenerativofen einen verbesserten Wirkungsgrad sowie geringere Baukosten aufweisen.

Diese Aufgabe wird erfindungsgemäß mit den Merkmalen des kennzeichnenden Teils des Anspruches 1 gelöst, wobei vorteilhafte Ausgestaltungen des erfindungsgemäßen Ofens und vorteilhafte Maßnahmen zum Betreiben des Ofens aus den Unteransprüchen hervorgehen.

Im folgenden wird ein Ausführungsbeispiel der Erfindung anhand von Zeichnungen näher beschrieben. Es zeigt:

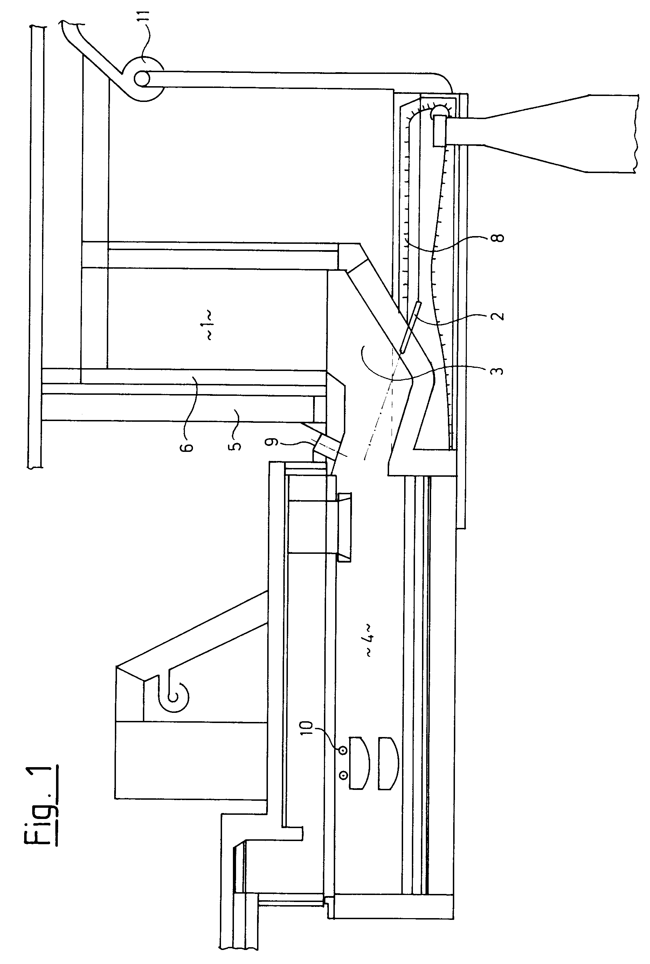

- Figur 1: einen Vertikal-Längsschnitt durch einen Ofen gemaß der Erfindung und

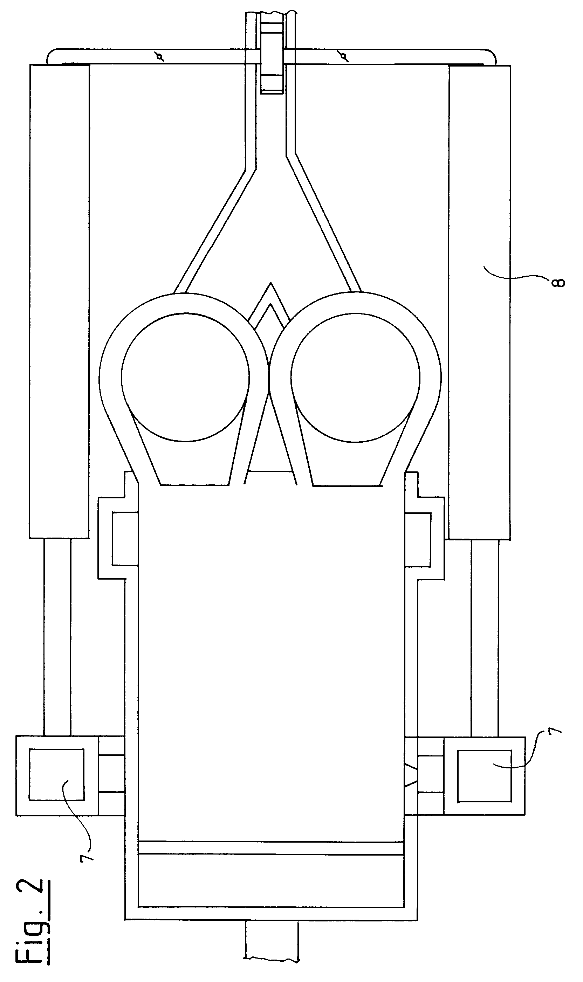

- Figur 2: einen Horizontalschnitt durch diesen Ofen.

Die erfindungsgemäße Regenerativwanne ist wie eine herkömmliche Regenerativwanne aufgebaut, sie besitzt aber wesentlich kleinere Regeneratoren 1. Der Brenner 2 ist im Brennerschacht 3 angeordnet, so daß der Gasstrom des Brenners 2 den gleichen Winkel aufweist wie die in die Wanne 4 einströmende Luft. Dadurch ist die Durchmischung der Flamme gering und es entsteht eine lange Flamme mit einem Flammenkern relativ geringer Temperatur. Die Kammer weist einen kurzen Oberbau auf und ist selbst relativ klein. Sie weist außen einen Stahlmantel 5 auf, welcher mit Feuerfest-Material 6 ausgekleidet ist und in welchem innen die Regenrativpackung in herkömmlicher Weise aufgebaut ist.

Die kleinen Dimensionen begünstigen den Einbau der Kammer in den Stahlmantel, so daß Zwischenwände zwischen den Kammern fehlen. Der Stahlmantel verhindert einen Falschlufteinbruch in Höhe der Gitterung, womit der Wirkungsgrad der Kammer erheblich verbessert werden kann.

Die erfindungsgemäßen Regenerativkammern 1 wechseln die Funktion erheblich schneller, als das bei den bekannten Regenrativkammern der Fall ist, Diese Kammern wechseln mit einer Frequenz von 20 bis 30 Minuten. Bei der Erfindung wird diese Frequenz auf weniger als 10, vorzugsweise auf 3 bis 8 Minuten reduziert. Das Volumen der Kammer ist daher erheblich verkleinert und führt bei den Feuerfest-Materialkosten zu erheblichen Einsparungen.

Bei dem mit dem Luftstrom parallel laufenden Brenner 2 ergibt sich eine lange, weiche Flamme mit niedrigen Flammenkerntemperaturen. Weitere Brenner 9 sind in einer Art Unterbankfeuerung mit einem wesentlich steileren Winkel als herkömmlich angebracht. Durch das Verhältnis des Gases im Hauptbrenner und des Gases in der Unterbankfeuerung kann der Wirkungsgrad und die Flammenlänge so eingestellt werden, daß auch eine genügend große Energiemenge im Doghouse-Bereich freigsetzt wird.

In der Höhe des Quellpunktes befinden sich seitlich angesetzte Rekuperatoren oder Regenerativbrenner, in welche ein Teil des Abgases abgezogen und gleichfalls ein Teil der Luft vorgewärmt wird, Gasmengen und Luftmengen sind dabei so bemessen, daß die Abgastemperaturen hinter den Rekuperatoren oder Regenerativbrennern relativ hoch sind, so daß das Abgas im weiteren Verlauf dieser Abgasstrecke über einen Cutvorwärmer geführt werden kann, welcher zweckmäßigerweise als eine Art Kratzerkettenförderer ausgeführt ist, in welchem Gemenge und Scherben auf eine Temperatur von ca. 400° C vorgewärmt werden können.

Die zusätzlich unterhalb der Rekuperatoren angesetzten Brenner 10 bzw. die Regenerativbrenner im Quellpunktbereich stabilisieren die Wanne, so daß die Hauptbrenner 2 mit variabler Länge je nach Betriebsart der Wanne gefahren werden können. Dabei werden in der Hauptkammer etwa 70 % des Abgases abgezogen, aber 85 % der Luft zugeführt.

Die dadurch erzeugten niedrigen Luftvorwärmtemperaturen führen zu einer weiteren Reduzierung des NOₓ und die niedrigeren Abgastemperaturen zwangsläufig zu einen niedrigen Wärmeverbrauch der Anlage.

Über die beiden seitlichen Rekuperatoren oder Regenerativbrenner werden etwa 30 % Abgas abgeführt, aber nur 15 % Luft zugeführt. Die Gasmengen verteilen sich dabei zu 90 % auf den Hauptbrenner und die Unterbankfeuerung und zu 10 % auf die Stabilisierungsbrenner 10. Bei einer solchen Verteilung der Abgas-/Luft- und Gasmengen ist die Abgastemperatur hinter den Rekuperatoren oder Regenerativbrennern relativ hoch und bei der niedrigen Luftvorwärmung in den Rekuperatoren 1 oder Regenerativbrennern arbeiten die Brenner überstöchiometrisch.

Die Kombination der überstöchiometrisch betriebenen Hauptbrenner mit relativ niedrigen Luftvorwärmtemperaturen führt zu einer weiteren Reduzierung des NOₓ-Anteils im Abgas. Bei der genannten Beaufschlagung der Rekuperatoren oder Regenerativbrenner mit Abgas und Luft ergibt sich eine Abgastemperatur an dieser Stelle von etwa 1000° C. Um das Abgas in einen Gemenge- und Scherbenvorwärmer 8 zu leiten, wird durch Einblasen von Kaltluft die Temperatur auf 600° C gesenkt.

Das Einblasen von Kaltluft ist uproblematisch, da erfahrungsgemäß keramische Rekuperatoren im Laufe einer Wannenreise undicht werden, so daß ein Falschluftanteil in das Abgas gelangt und damit die Abgastemperaturen fallen. Dieser natürliche Alterungsprozeß stört in diesem Fall nicht, weil dann der Ventilator für das Einblasen der Kaltluft gedrosselt wird.

Strömungsmäßig hinter dem Gutvorwärmer 8 und den Hauptregeneratoren 1 werden die Abgasströme wieder zusammengeführt, wobei der Abgasstutzen des Exhausters 11, der das Abgas durch die Rekuperatoren oder die Regenerativbrenner und den Gutvorwärmer saugt, als Injektor im Hauptabgaskanal arbeitet.

Ersichtlicherweise ist bei einem solchen Aufbau einer Regenerativwanne die Schmelzleistung aufgrund der Vorwärmung des Gutes höher als bei herkömmlichen Wannen.

Darüber hinaus liegt die Mischtemperatur des Abgases etwa zwischen 250 und 300° C, so daß der spezifische Energieverbrauch dieser Anlagen erheblich unter den herkömmlichen Anlagen liegt. Darüber hinaus ist durch die Variationsmöglichkeiten mit den einzelnen Brennern sowohl eine optimale Flammenführung als auch ein minimaler NOₓ-Ausstoß steuerbar.

Der niedrige NOₓ-Wert wird noch dadurch vermindert, daß der Gesamtabgasmassenstrom aus einer solchen Wanne niedriger ist, als der einer herkömmlichen Wanne. Es ist möglich, vorteilhaft die Aggregate, die zusätzlich zu dieser Wanne gebraucht werden, nach und nach nachzurüsten. So kann man die Rekuperatoren oder die Regenerativbrenner ohne weiteres an eine bestehende Wanne ansetzen, ebenso die Gutvorwärmer und zu einem anderen Zeitpunkt können die Regeneratoren in der neuen Bauform gebaut werden.

Der Platzbedarf dieser Wanne ist keineswegs größer als bei herkömmlichen Wannen, da das Volumen der Regeneratoren erheblich verkleinert wird. Die Verkleinerung des Gittervolumens bringt einen höheren Druckverlust in den Regeneratoren, so daß das Abgas stärker abgesaugt und die Luft mit höherem Druck durchgedrückt werden muß. Das ist aber wärmetechnisch kein Nachteil, weil über die höheren Geschwindigkeiten sowohl auf der Abgas- als auf der Luftseite ein besserer Wärmeübergang erzwungen wird. Darüber hinaus wird bei einer größeren Druckdifferenz zwischen Sammelraum und Gitterung eine gleichmäßigere Strömung erzeugt, die noch dadurch begünstigt wird, daß der Querschnitt nicht mehr rechteckig, sondern rund ist und dadurch die strömungsmäßig schwer erreichbaren Ecken entfallen.

## Patentansprüche

1. Regenerativer Glasschmelzofen, mit einer Glasschmelzwanne, wechselweise zuschaltbaren Regeneratoren mit einer Regenerativpackung aus Feuerfest- Material und Brennern,
dadurch gekennzeichnet, daß die Regeneratoren (1) rund sind und einen Stahlmantel (5) aufweisen, der innen mit einer Auskleidung (6) aus Feuerfest-Material ausgestattet ist.

2. Glasschmelzofen nach Anspruch 1, dadurch gekennzeichnet, daß er zwei in Höhe des Quellpunktes seitlich angesetzte Regeneratoren (7) oder Regenerativbrenner aufweist.

3. Glasschmelzofen nach Anspruch 2, dadurch gekennzeichnet, daß er in Strömungsrichtung des Abgases hinter den Regeneratoren oder Regenerativbrennern einen Gemenge/Scherbenvorwärmer (8) aufweist.

4. Glasschmelzofen nach Anspruch 2, dadurch gekennzeichnet, daß er in Höhe des Quellpunktes Stabilisierungsbrenner (10) aufweist.

5. Glasschmelzofen nach einem der Ansprüche 1 bis 4, dadurch gekennzeichnet, daß er Brenner (9) aufweist, die nach Art, aber steiler als eine herkömmliche Unterbankfeuerung angeordnet sind.

6. Verfahren zum Betreiben des Glasschmelzofens nach Anspruch 1, dadurch gekennzeichnet, daß die Zeit für den Wechsel zwischen den Regeneratoren geringer als zehn Minuten ist.

7. Verfahren zum Betreiben des Glasschmelzofens nach Anspruch 6, dadurch gekennzeichnet, daß die Zeit zwischen drei und acht Minuten beträgt.

8. Verfahren zum Betreiben des Glasschmelzofens nach Anspruch 7 oder 8, dadurch gekennzeichnet, daß der Brennstoff im Brennerhals zur Erzeugung einer Flamme mit niedriger Flammenkerntemperatur parallel zur Heißluftströmung eingeführt wird.

9. Verfahren nach einem der Ansprüche 6 bis 8, dadurch gekennzeichnet, daß ein Teil der Heißluft mit entsprechender Brennstoffzuführung nach Art einer Unterbankfeuerung steil in die Schmelzkammer eingeführt wird.

10. Verfahren nach einem der Ansprüche 6 bis 9, dadurch gekennzeichnet, daß im Verhältnis den Regeneratoren mehr Luft zugeführt wird, als Abgas abgeführt wird, während in den Rekuperatoren oder Regenerativbrennern im Verhältnis mehr Abgas abgeführt als Luft zugeführt wird.

11. Verfahren nach einem der Ansprüche 6 bis 10, dadurch gekennzeichnet, daß die Hauptbrenner überstöchiometrisch und die Nebenbrenner der Unterbank und zur Stabilisierung unterstöchiometrisch gefahren werden.
